Europäisches Patentamt

European Patent Office

Office européen des brevets

(11) Veröffentlichungsnummer: **0 513 575 A1**

## (12) EUROPÄISCHE PATENTANMELDUNG

(21) Anmeldenummer: **92106994.4**

(22) Anmeldetag: **24.04.92**

(51) Int. Cl.⁵: **H02K 9/19**

(30) Priorität: **10.05.91 DE 4115273**

(43) Veröffentlichungstag der Anmeldung:
**19.11.92 Patentblatt 92/47**

(84) Benannte Vertragsstaaten:
**AT BE CH DE DK ES FR GB IT LI NL SE**

(71) Anmelder: **J.M. Voith GmbH**
**Sankt Pöltener Strasse 43**
**W-7920 Heidenheim(DE)**

(72) Erfinder: **Wüst, Bernhard, Dr.**
**Friedrich Ebert-Strasse 17**
**W-7920 Heidenheim(DE)**

(74) Vertreter: **Weitzel, Wolfgang, Dr.-Ing. et al**
**Friedenstrasse 10**
**W-7920 Heidenheim(DE)**

(54) **Elektrische Maschine.**

(57) Es handelt sich um eine Transversalflußmaschine mit einem Rotor (3), der an einer zentralen Scheibe (4) ringförmige sich nach beiden Seiten hin axial erstreckende Polstrukturen (5) aufweist. Radial außen und radial innen sind diese Polstrukturen (5) durch Außen- und Innenstatoren (6,7) umgeben, welche ihrerseits ringförmige Wicklungen (8) aufweisen. Zur Abfuhr der Wärme, die in den Statoren (6,7) selbst entsteht, sind die Statoren (6,7) mit ringförmigen Hohlräumen (9,10) umgeben, durch die in Umfangsrichtung ein durch das Gehäuse eingespeistes Kühlmittel strömt. Die Anordnung der Kanäle ist dabei so gewählt, daß eine tangentiale Strömung innerhalb der Hohlräume (9,10) entsteht und auch das Gehäuse (1) selbst von Kanälen durchzogen ist, so daß dieses zusätzlich gekühlt wird. Es kann ferner vorgesehen sein, das Gehäuse (1) von einem Außengehäuse (32) zu umgeben, so daß eine Verwendung der elektrischen Maschine für Betriebsverhältnisse möglich ist, bei denen eine niedrige Temperatur der Gehäuseoberfläche gefordert ist.

EP 0 513 575 A1

Die Erfindung betrifft eine elektrische Maschine, insbesondere eine stromrichtergespeiste Synchronmaschine mit Permanentmagnet-Erregung, gemäß dem Oberbegriff des Anspruches 1. Eine Maschine dieser Gattung ist aus der DE-PS 38 26 339 bekannt.

Die bekannte Maschine ist auch unter der Bezeichnung "Transversalflußmaschine" bekannt. Der Rotor umfaßt im wesentlichen eine zentrale Scheibe, der sich im Bereich des äußeren Umfangs nach beiden Seiten hin axial eine ringförmige Polkörperstruktur anschließt. Rings um den inneren und äußeren Umfang dieser Polkörperstruktur sind ringförmige Statoren angeordnet, deren Pole jeweils von radial außen und von radial innen her den Polkörpern des Rotors unter Beibehaltung eines Luftspaltes gegenüberstehen. Die Statoren enthalten dabei jeweils eine zur Drehachse des Rotors koaxiale ringförmige Wicklung. Für eine symmetrische Grundstruktur einer derartigen Maschine sind also jeweils zwei ringförmige Außenstatoren sowie zwei innenliegende und ebenfalls ringförmige Innenstatoren vorgesehen.

Der Vorzug dieser Motorbauart besteht in einer besonders hohen Leistungsdichte, d.h. konzentriert auf ein kleines Bauvolumen. Das Problem dabei ist die Abfuhr der in den Statoren entstehenden Wärme. Dabei ist zu bedenken, daß die Wärme im zentralen Teil der Statoren im Bereich der Wicklungen entsteht. Eine Abfuhr dieser Wärme über die äußere Oberfläche dieser Maschine ist nur mittels eines sehr großen Temperaturgefälles möglich, weil, wie schon beschrieben, die Maschine geringe Außenabmessungen aufweist. Dies führt aber zu thermischer Überlastung der Wicklungen und vor allem auch der Permanentmagnete, die zur Polkörperstruktur des Rotors gehören.

Elektrische Maschinen der üblichen Art weisen vorzugsweise eine Luftkühlung auf. Dazu ist auf der Rotorwelle ein Gebläserad angeordnet, das eine Zwangsdurchströmung des Stators in Maschinenlängsrichtung herbeiführt. Eine solche Längsbelüftung erlaubt die Maschine der eingangs geschilderten Gattung jedoch nicht.

Aus der EP-B 02 99 908 ist eine Maschine bekannt, bei der in einem geschlossenen Kreislauf eine gemischte Längs- und Radialbelüftung vorgesehen ist. In einem von Axiallüftern erzwungenen Kreislauf wird ein Kühlgas durch den Rotor und den Stator hindurchgeführt, wobei die Wärme in einem unmittelbar angebauten Wärmetauscher nach außen abgeführt wird. Eine solche Maßnahme ist dann möglich, wenn auch der Rotor den Durchtritt von Kühlmittel, im vorliegenden Falle ein Gas, zuläßt. Der unmittelbar im Gehäuse untergebrachte Wärmetauscher vergrößert jedoch die Außenabmessungen der Maschine, was die Einsatzmöglichkeiten, insbesondere für Fahrzeuge, deutlich einschränkt.

Die Aufgabe der Erfindung besteht darin, für eine Transversalflußmaschine der eingangs beschriebenen Gattung eine wirksame Kühlmöglichkeit zu schaffen, die nicht mit der Vergrößerung der Außenabmessungen verknüpft ist.

Diese Aufgabe wird durch das kennzeichnende Merkmal des Anspruches 1 gelöst. Die Statoren der Maschine werden gemäß der Erfindung von einem vorzugsweise flüssigen Kühlmittel so durchströmt, daß sie von einer Stelle ausgehend jeweils in Umfangsrichtung ringförmig, bezogen auf die Drehachse des Rotors, umschlossen sind. Diese Anordnung erlaubt es, die Verlustwärme unmittelbar in der Nähe des Entstehungsortes, nämlich den Wicklungen, aufzunehmen und auf kürzestem Wege abzuführen. Diese tangentiale, also in Umfangsrichtung orientierte Durchströmung gewährleistet die geringsten Strömungsverluste, d.h. erfordert die geringste Oberfläche zur Benetzung. Darüberhinaus ergibt sich durch diese Anordnung die geringste Beeinflussung des Formverhaltens der Statoren durch Temperaturunterschiede, wodurch auch die Energieumsetzung zwischen den Statoren und dem Rotor die geringste Beeinflussung erfährt. Gleichzeitig ist durch diese diagonale Durchströmung des Gehäuses im Bereich der Statoren gewährleistet, daß nur eine ganz geringe Restwärme an die Oberfläche des Gehäuses dringt.

In den Unteransprüchen sind vorteilhafte konstruktive Weiterbildungen der Erfindung angegeben. Diese beziehen sich insbesondere auf die Verteilung des Kühlmittels auf die Statoren. Die Statoren sind mit Hohlräumen ausgerüstet, die von dem Kühlmittel durchströmt sind und in welche ringförmig ausgebildete Kühlrippen zur Vergrößerung der Oberfläche an den Statoren hineinragen. Das Gehäuse der Maschine kann von einem zweiten umschließenden Gehäuse umgeben sein, so daß eine weitere Abstrahlung von Wärme an die äußere Umgebung verhindert ist.

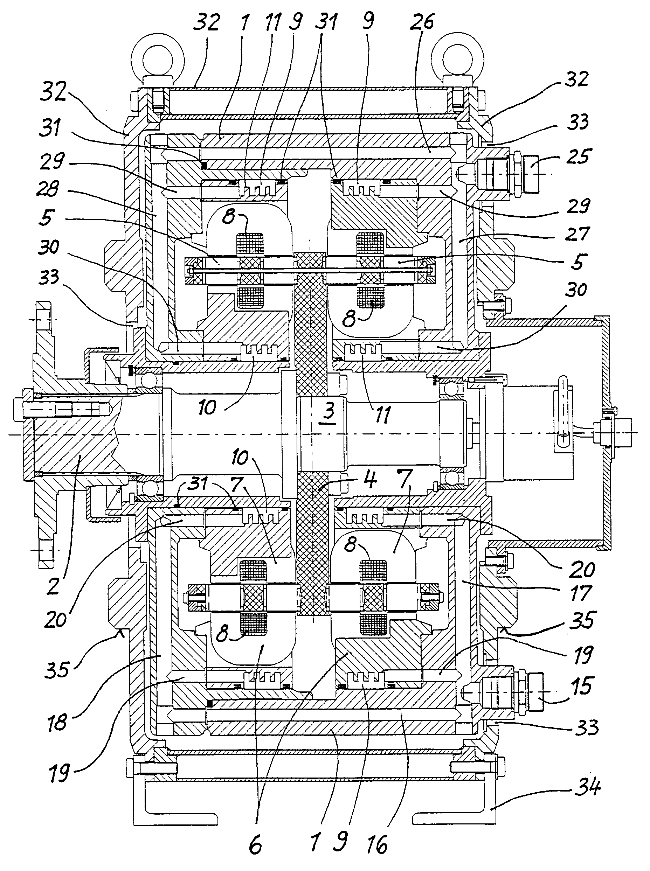

Die Erfindung wird nachstehend anhand der Zeichnung, die ein Ausführungsbeispiel zeigt, näher erläutert.

Die Zeichnung zeigt in einem Längsschnitt eine Transversalflußmaschine mit einem Gehäuse 1, in dem ein Rotor 3 mit einer Rotorwelle 2 drehbar gelagert ist. An der Rotorwelle 2 ist über einen Bund eine zentrale und sich radial erstreckende Scheibe 4 befestigt. Im radial äußeren Bereich der Scheibe 4 erstrecken sich beidseitig in axialer Richtung ringförmige Polstrukturen 5. Jeweils von radial innen und radial außen stehen diesen Polstrukturen 5 Statorelemente gegenüber, die am Gehäuse 1 befestigt sind. Es handelt sich dabei um Außenstatoren 6, deren Polschuhe zur äußeren Mantelfläche und Innenstatoren 7, deren Polschuhe zur inneren Mantelfläche der Rotor-Polstrukturen 5 unter Einhaltung eines Luftspaltes hin gerichtet sind. Innerhalb der Innen- und Außenstatoren 6, 7 befinden sich jeweils ringförmige Wicklungen 8. Die Polstrukturen 5 des Rotors umfassen wechselweise angeordete Permanentmagnete und Weicheisenelemente in entsprechender Einbettung mittels Kunststoff.

Zur Abfuhr der Wärme, die in den Wicklungen 8 der Außen- und Innenstatoren 6, 7 entsteht, sind die Außenstatoren von Hohlräumen 9 am äußeren Umfang und die Innenstatoren von Hohlräumen 10 am inneren Umfang umgeben. Diese Hohlräume 9, 10 sind von Kühlmittel durchströmt, wobei zur Vergrößerung der Oberfläche in die Hohlräume hinein noch radial gerichtete Kühlrippen 11 vorgesehen sein können.

Der Zu- bzw. Rücklauf des Kühlmittels erfolgt durch Anschlußstutzen 15, 25 unmittelbar am Gehäuse 1. Der Zulaufstutzen 15 befindet sich dabei im unteren Bereich, der Rücklaufstutzen 25 diametral dazu gelegen im oberen Bereich des Gehäuses 1. Die Zu- bzw. Rücklaufstutzen 15, 25 weisen dabei, ausgehend von einer Stirnseite des Gehäuses 1, in axialer Richtung. Vom Zulaufstutzen 15 aus führt ein axial verlaufender Verteilerkanal 16 zur anderen Stirnseite des Gehäuses 1. Vom Verteilerkanal 16 aus führt ein radial verlaufender Verteilerkanal 17 im Bereich der einen Stirnseite, ein zweiter Verteilerkanal 18 im Bereich der anderen Stirnseite des Gehäuses nach radial innen. Von diesen Verteilerkanälen 17, 18 aus führen Zulaufkanäle 19 direkt in die ringförmigen Hohlräume 9 der Außenstatoren 6 und Zulaufkanäle 20 in die Hohlräume 10 der Innenstatoren 7. Diese Anordnung ergibt eine gleichmäßige Verteilung des Kühlmittels in die verschiedenen Hohlräume.

Die Durchströmung der Hohlräume 9, 10 erfolgt von den Kanälen 19, 20 aus ringförmig in Umfangsrichtung. Den Rücklauf des Kühlmittels übernehmen Rücklaufkanäle 29, 30 aus den ringförmigen Hohlräumen 9, 10 heraus, wobei diese Rücklaufkanäle wiederum diametral den Zulaufkanälen 19, 20 im Gehäuse 1 gegenüberliegen. Die Rücklaufkanäle 29, 30 münden in radial verlaufende Sammelkanäle 27, 28, die über einen axial verlaufenden Sammelkanal 26 zum Rücklaufstutzen 25 führt. Die erfindungsgemäße Anordnung dieser Kühlmittelführung durch die elektrische Maschine gewährleistet eine intensive Kühlung der direkt an der Wärmeentwicklung beteiligten Statoren und eine zuverlässige Wärmeabfuhr in tangentialer Richtung aus dem Inneren der Hohlräume heraus. Zwischen den Außenstatoren 6 und Innenstatoren 7 und dem sie umgebenden Gehäuse 1 befinden sich Dichtungen 31, die einen Durchtritt von Kühlmittel ins Innere der elektrischen Maschine, insbesondere zum Rotor hin, verhindern.

Die Zeichnung läßt ferner erkennen, daß das Gehäuse 1 allseitig von einem zweiten Außengehäuse 32 umgeben ist. Das Gehäuse 1 mit dem darin gelagerten Rotor 3 und den Statoren 6, 7 ist im Außengehäuse 32 mit einer nicht dargestellten Tragkonstruktion gelagert. Das Außengehäuse 32 weist Durchbrüche 33 auf, die von der Rotorwelle 2 mit Antriebsflansch und den Zulauf- und Rücklaufstutzen 15, 25 durchdrungen sind. Eventuell verbleibende Spalte in den Durchbrüchen 33 können mit Dämm-Material verschlossen sein. Die elektrische Maschine wird entweder über Füße 34 am Außengehäuse 32 montiert oder über Zentrierflächen 35 an einer der beiden Stirnseiten des Außengehäuses 32.

Mit dieser zweischaligen Bauform wird nicht nur die Geräuschemission vom Gehäuse 1 an die Umgebung reduziert, sondern auch eine Wärmeabstrahlung. Durch die erfindungsgemäße Anordnung der Kühlkanäle wird nämlich nicht nur die Wärme aus den Bereichen abgeführt, in denen sie entsteht, nämlich den Statoren, sondern auch aus dem Gehäuse 1, in welches durch Wärmeleitung aus den Statoren Wärme übertreten kann. Sowohl die Hohlräume 9, als auch die Hohlräume 10 des Außenstators 6 bzw. Innenstators 7 sind nämlich vom Gehäuse 1 begrenzt, so daß auch dieses durch die Strömung in Umfangsrichtung gleichzeitig gekühlt wird. Es ist darüber hinaus noch möglich, auch das Außengehäuse 32 an dessen äußerer Oberfläche noch zusätzlich doppelwandig auszuführen, wenn die Betriebsverhältnisse für die elektrische Maschine eine besonders tiefe Gehäusetemperatur verlangen.

**Patentansprüche**

1. Elektrische Maschine, insbesondere Motor mit permanentmagneterregtem Feld, mit den folgenden Merkmalen:

a) ein Rotor (3) umfaßt eine in einem Gehäuse (1) gelagerte Rotorwelle (2) mit einer drehstarr darauf befestigten und sich im wesentlichen radial erstreckenden, kreisrunden, zentralen Scheibe (4);

b) am äußeren Umfang der zentralen Scheibe (4) und koaxial zur Rotorwelle (2) erstrecken sich axial nach beiden Seiten hin ringförmig ausgebildete Polkörper (5);

c) die Polkörper (5) des Rotors (3) weisen wechselweise angeordnete Permanentmagnete und Weicheisenteile auf, die unter Verwendung von Kunststoffteilen miteinander verbunden sind;

d) radial außerhalb der Polkörper (5) sind Außenstatoren (6) angeordnet, deren Polschuhe unter Beibehaltung eines Luftspaltes zur äußeren Mantelfläche der Polkörper (5) hin gerichtet sind, und radial innerhalb der Polkörper (5) sind Innenstatoren (7) angeordnet, deren Polschuhe unter Beibehaltung eines Luftspaltes zur inneren Mantelfläche der Polkörper (5) hin gerichtet sind;
e) die Außenstatoren (6) und die Innenstatoren (7) weisen ringförmige und zur Drehachse der Rotorwelle (2) koaxiale Wicklungen (8) auf;

dadurch gekennzeichnet, daß
f) die Außenstatoren (6) und Innenstatoren (7) von ringförmigen Hohlräumen umgeben sind, die von einem in Umfangsrichtung geleiteten Kühlmittel durchströmt sind.

2. Elektrische Maschine nach Anspruch 1, dadurch gekennzeichnet, daß der Eintritt (15) des Kühlmittels und dessen Austritt (25) diametral zueinander am Gehäuse (1) angebracht sind.

3. Elektrische Maschine nach Anspruch 1 oder 2, dadurch gekennzeichnet, daß der Eintritt (15) und Austritt (25) des Kühlmittels im jeweils radial äußeren Bereich des Gehäuses (1) angeordnet sind.

4. Elektrische Maschine nach einem der Ansprüche 1 bis 3, dadurch gekennzeichnet, daß die Außenstatoren (6) und Innenstatoren (7) in Parallel-Schaltung gleichzeitig durchströmt werden, wozu am Kühlmittel-Zulauf mindestens ein im äußeren Umfangsbereich des Gehäuses (1) sich in axialer Richtung erstreckender Verteilerkanal (16) vorgesehen ist, dem sich nach radial innen verlaufende Verteilerkanäle (17, 18) anschließen und durch Zulaufkanäle (19, 20) mit Hohlräumen (9, 10) an den Außenstatoren (6) und Innenstatoren (7) in Verbindung stehen.

5. Elektrische Maschine nach einem der Ansprüche 1 bis 4, dadurch gekennzeichnet, daß für den Kühlmittel-Rücklauf analog zur Kanalführung für den Kühlmittel-Zulauf im Umfangsbereich des Gehäuses (1) mindestens ein sich in axialer Richtung erstreckender Sammelkanal (26) vorgesehen ist, in welchen radial verlaufende Sammelkanäle (27, 28) münden, welche ihrerseits mit den Hohlräumen (9, 10) in den Außenstatoren (6) und Innenstatoren (7) in Verbindung stehen.

6. Elektrische Maschine nach einem der Ansprüche 1 bis 5, dadurch gekennzeichnet, daß die Außenstatoren (6) im Bereich der sie umschließenden Hohlräume (9) nach radial außen weisende, und die Innenstatoren (7) im Bereich der radial innen benachbarten Hohlräume (10) nach radial innen weisende Kühlrippen (11) aufweisen, die vom Kühlmittel benetzt werden.

7. Elektrische Maschine nach Anspruch 6, dadurch gekennzeichnet, daß die Kühlrippen (11) an den Außenstatoren (6) und Innenstatoren (7) zur Drehachse der Rotorwelle (2) koaxial ringförmig ausgebildet sind.

8. Elektrische Maschine nach einem der Ansprüche 1 bis 7, dadurch gekennzeichnet, daß der Eintritt (15) und Austritt (25) des Kühlmittels an einer der Stirnseiten des Gehäuses (1) jeweils in axialer Richtung angeordnet sind.

9. Elektrische Maschine nach einem der Ansprüche 1 bis 8, dadurch gekennzeichnet, daß das Gehäuse (1) von einem Außengehäuse (32) umgeben ist, in welchem das Gehäuse (1) gelagert ist und welches Durchbrüche (33) für den Kühlmittelzulauf (15) und Kühlmittelrücklauf (25) sowie die Rotorwelle (2) aufweist.

10. Elektrische Maschine nach einem der Ansprüche 1 bis 9, dadurch gekennzeichnet, daß die Übertragung des Reaktions-Drehmomentes nach außen über das umschließende Gehäuse (32) erfolgt, nämlich über eine Zentrierung (35) an einer Gehäuse-Stirnseite oder Gehäusefüße (34).

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-C-3 826 339 (J.M. VOITH GMBH)<br>* Spalte 1, Zeile 1 - Spalte 3, Zeile 14; Abbildungen 1,2 *<br>--- | 1,3-5 | H02K9/19 |
| Y | FR-A-1 499 265 (SIEMENS-SCHUCKERTWERKE)<br>* Seite 2, linke Spalte, Zeile 56 - Seite 3, rechte Spalte, Zeile 42; Abbildungen 1-3 *<br>--- | 1,3-5 | |
| A | GB-A-582 409 (WINTHER)<br>* Seite 1, Zeile 77 - Seite 2, Zeile 13; Abbildungen 1-6 *<br>--- | 1,3,6-8 | |
| A | DE-A-2 055 295 (GESELLSCHAFT FÜR KERNFORSCHUNG ET AL)<br>* Seite 5, Zeile 13 - Seite 6, Zeile 7; Abbildungen 1-3 *<br>--- | 1-3,8 | |
| A | DE-C-839 098 (HEENAN & FROUDE)<br>* Seite 1, Zeile 20 - Seite 5, Zeile 54; Abbildungen 1-6 *<br>----- | 9,10 | RECHERCHIERTE SACHGEBIETE (Int. Cl.5)<br><br>H02K |

Der vorliegende Recherchenbericht wurde für alle Patentansprüche erstellt

| Recherchenort | Abschlußdatum der Recherche | Prüfer |
|---|---|---|
| DEN HAAG | 12 AUGUST 1992 | TIO K.H. |